Europäisches Patentamt

European Patent Office

Office européen des brevets

(11) Publication number: **0 445 567 A1**

(19)

(12) # EUROPEAN PATENT APPLICATION

(21) Application number: **91102309.1**

(22) Date of filing: **19.02.91**

(51) Int. Cl.⁵: **F01N 3/02**, F02N 9/00, F02D 33/02

(30) Priority: **22.02.90 JP 16998/90 U**
**17.08.90 JP 217357/90**

(43) Date of publication of application:
**11.09.91 Bulletin 91/37**

(84) Designated Contracting States:
**DE FR GB**

(71) Applicant: **Mazda Motor Corporation**
**No. 3-1, Shinchi Fuchu-cho**
**Aki-gun Hiroshima-ken(JP)**

(72) Inventor: **Kashimoto, Masaaki c/o Mazda**
**Motor Corp.**
**No. 3-1, Shinchi, Fuchu-cho**

**Aki-gun, Hiroshima-ken(JP)**
Inventor: **Sakurai, Shigeru c/o Mazda Motor**
**Corp.**
**No. 3-1, Shinchi, Fuchu-cho**
**Aki-gun, Hiroshima-ken(JP)**
Inventor: **Yuzuriha, Yasuhiro c/o Mazda Motor**
**Corp.**
**No. 3-1, Shinchi, Fuchu-cho**
**Aki-gun, Hiroshima-ken(JP)**

(74) Representative: **Lohrentz, Franz, Dipl.-Ing. et**
**al**
**Ferdinand-Maria-Strasse 12**
**W-8130 Starnberg(DE)**

(54) **Exhaust gas cleaning system for diesel engine.**

(57) An exhaust gas cleaning system for a diesel engine has a particulate filter (25) which is disposed in an exhaust passage (5) of the diesel engine (1) and traps combustible particles contained in exhaust gas flowing through the exhaust passage. An exhaust flow control valve (27) is disposed in the exhaust passage downstream of the particulate filter and limits the amount of exhaust gas flowing through the exhaust passage. An intake air heater (22) is disposed in the intake passage of the engine and heats intake air flowing through the intake passage. When the particulate filter is to be recovered, the intake air heater is caused to heat the intake air and the exhaust flow control valve is caused to limit the amount of exhaust gas flowing through the exhaust passage. Then the engine speed is increased when the temperature of the exhaust gas in the exhaust passage upstream of the exhaust flow control valve reaches a predetermined value so that the combustible particles trapped in the particulate filter burns under the heat of the exhaust gas.

F I G.1

## BACKGROUND OF THE INVENTION

Field of the Invention

This invention relates to an exhaust gas cleaning system for a diesel engine, and more particularly to an exhaust gas cleaning system for a diesel engine in which combustible particles contained in exhaust gas are trapped by a particulate filter and are burned.

Description of the Prior Art

As disclosed, for instance, in Japanese Unexamined Patent Publication No. 62(1987)-38816, there has been known an exhaust gas cleaning system for a diesel engine in which a particulate filter provided in the exhaust passage of the engine traps combustible particles such as carbon particles contained in exhaust gas to clean up the exhaust gas and the trapped particles are subsequently burned in order to recover the particulate filter. In the system, the combustible particles are burned, for instance, when the amount of the combustible particles trapped by the particulate filter becomes large, and the burning disposal of the combustible particles is effected by elevating the temperature of the exhaust gas passing through the particulate filter by means of an electric heater or a burner provided upstream of the particulate filter.

However the exhaust gas cleaning system is disadvantageous in that a heating means such as an electric heater or burner must be provided in the exhaust passage, which complicates the structure of the exhaust system.

Further, in Japanese Unexamined Utility Model Publication No. 61(1986)-173712, there is disclosed a exhaust gas cleaning system in which highly combustible material is sprayed on the particulate filter and the combustible particles trapped by the particulate filter are burned together with the highly combustible material under the heat of the exhaust gas.

This exhaust gas cleaning system is also disadvantageous in that a mechanism for spraying the highly combustible material on the particulate filter must be provided in the exhaust passage, which complicates the structure of the exhaust system and adds to manufacturing cost of the exhaust system.

When the temperature of intake air is elevated by an intake air heater which is generally provided in the intake passage of the diesel engine in order to facilitate starting of the engine, the discharge rate of the exhaust gas is limited by an exhaust flow control valve provided in the exhaust passage downstream of the particulate filter and the engine speed is increased, the temperature of the exhaust gas passing through the particulate filter may be elevated to such a degree that the combustible particles trapped by the particulate filter will burn under the heat of the exhaust gas without aids such as the electric heater or the burner provided in the exhaust passage or the highly combustible material to be sprayed on the particulate filter. However, if the engine speed is simply increased in such a system, the flow rate of intake air is increased in response to increase in the engine speed and the efficiency of the intake air heater deteriorates, which results in extension of the time required for the temperature of the exhaust gas to increase to such a value that the combustible particles trapped by the particulate filter burn under the heat of the exhaust gas.

## SUMMARY OF THE INVENTION

In view of the foregoing observations and description, the primary object of the present invention is to provide an exhaust gas cleaning system in which the combustible particles trapped in the particulate filter can be burned out in a relatively short time during idle of the engine without aid of additional mechanisms such as an electric heater, a burner or the mechanism for spraying the highly combustible material.

In accordance with the present invention, there is provided an exhaust gas cleaning system for a diesel engine comprising a particulate filter which is disposed in an exhaust passage of the diesel engine and traps combustible particles contained in exhaust gas flowing through the exhaust passage, an exhaust flow control valve which is disposed in the exhaust passage downstream of the particulate filter and limits the amount of exhaust gas flowing through the exhaust passage, an intake air heating means which is disposed in the intake passage of the engine and heats intake air flowing through the intake passage, a temperature sensor which detects the temperature of intake air in the intake passage downstream of the intake air heating means or the temperature of exhaust gas in the exhaust passage upstream of the particulate filter, an engine speed control means which increases the engine speed, a filter recovery detecting means which detects that the particulate filter is to be recovered, and a control means which, when the filter recovery detecting means detects that the particulate filter is to be recovered, causes the intake air heating means to heat the intake air and the exhaust flow control valve to limit the amount of exhaust gas flowing through the exhaust passage and then causes the engine speed control means to increase the engine speed so that the combustible particles trapped in the particulate filter burns under the heat of the exhaust gas, the control means causing the engine speed control means to increase the engine speed when the temperature detected by the temperature sensor reaches a predetermined value.

Preferably, the exhaust gas cleaning system is provided with an intake flow control valve which is disposed in the intake passage upstream of the intake air heating means and is operated to limit the amount of intake air flowing through the intake passage after the exhaust flow control valve is operated to limit the amount of exhaust gas flowing through the exhaust passage when the particulate filter is recovered, and an exhaust pressure control means which detects the pressure of the exhaust gas in the exhaust passage upstream of the exhaust flow control valve and controls the opening degree of the exhaust flow control valve so that the pressure of the exhaust gas becomes a predetermined value.

Generally, elevation of the temperature of the exhaust gas flowing through the exhaust passage is more promoted as the pressure of the exhaust gas in the exhaust passage is increased. The pressure of the exhaust gas can be increased by throttling the intake passage and the exhaust passage. However if the intake passage is first throttled and then the exhaust passage is throttled, the amount of intake air becomes short and the engine will half misfire. On the other hand, if the exhaust passage is first throttled and then the intake passage is throttled, the pressure of the exhaust gas once increases in response to throttling the exhaust passage but thereafter reduces in response to throttling the intake passage due to reduction in the amount of intake air of the engine. Accordingly, the exhaust passage must be throttled to a degree which will produce an exhaust gas pressure equal to the exhaust gas pressure necessary for recovery of the particulate filter plus the value by which the exhaust gas pressure reduces in response to throttling the intake passage. However if the exhaust passage is throttled to such a degree, the exhaust gas pressure increases excessively high immediately after throttling the exhaust passage, which can adversely affect closure of the exhaust valves of the engine. Thus it is preferred that the exhaust passage be throttled before the intake passage and then the degree of throttling of the exhaust passage (the opening degree of the exhaust flow control valve) be controlled so that the exhaust gas pressure becomes a predetermined value which is necessary for recovery of the particulate filter.

BRIEF DESCRIPTION OF THE DRAWINGS

Figure 1 is a schematic view showing a diesel engine provided with an exhaust gas cleaning system in accordance with an embodiment of the present invention,

Figure 2 is a flow chart for illustrating the program executed by the control unit in the filter recovery control,

Figure 3 is view similar to Figure 1 but showing another embodiment of the present invention, and

Figure 4 is a timing chart for illustrating the procedure of the recovery of the particulate filter in the embodiment shown in Figure 3.

DESCRIPTION OF THE PREFERRED EMBODIMENT

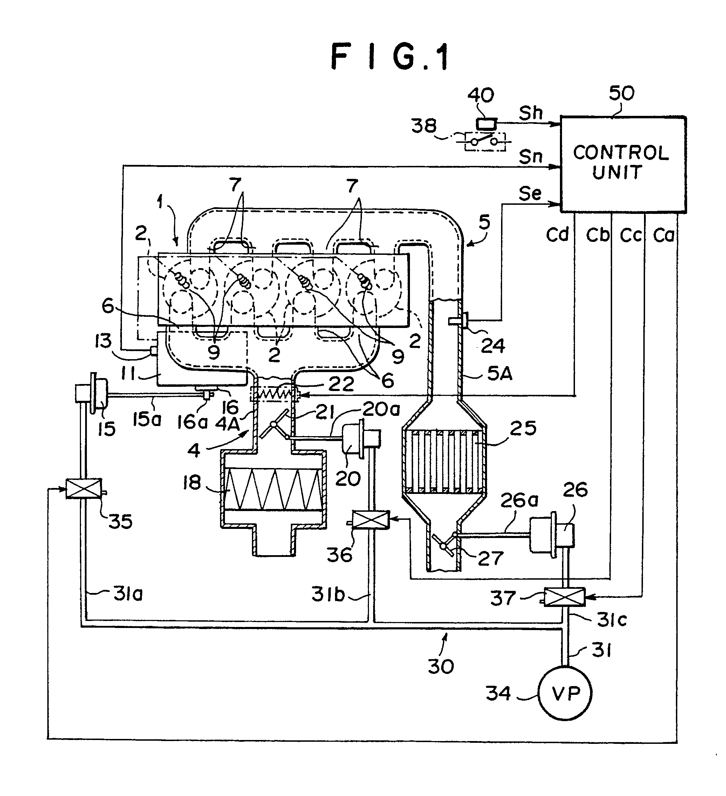

In Figure 1, a diesel engine 1 for a vehicle has four cylinders 2 arranged in a row. The engine 1 is further provided with an intake passage 4 and an exhaust passage 5. The intake passage 4 has four discrete intake passages 6 each of which communicates with one of the cylinders 2. A main combustion chamber and a sub combustion chamber are formed in the upper portion of each cylinder 2 and a fuel injection valve 9 is provided for each sub combustion chamber. Pressure-regulated fuel is fed to each of the fuel injection valve 9 from a fuel pump system 11. The exhaust passage 5 has four discrete exhaust passages 7 each of which communicates with one of the cylinders 2.

The fuel pump system 11 is driven by revolution of the crankshaft of the engine 1 which is transmitted to its driving shaft, and is provided with an engine speed sensor 13 and a fuel control mechanism 16. The engine speed sensor 13 detects the engine speed through the rotational speed of the driving shaft of the fuel pump system 11. The fuel control mechanism 16 has a fuel control lever 16a which is driven by a diaphragm type actuator 15 by way of a link member 15a to change the amount of fuel to be discharged from the fuel pump system 11.

A common intake passage portion 4A which forms the upstream portion of the intake passage 4 is provided with an air cleaner 18, an intake flow control valve 21 and an intake air heater 22 from the upstream side. The intake flow control valve 21 is driven by a diaphragm type actuator 20 by way of a link member 20a and limits the amount of intake air flowing through the intake passage 4. Even at its minimum opening degree, the intake flow control valve 21 does not completely close the intake passage 4. The intake air heater 22 heats intake air flowing through the intake passage 4 to improve combustibility of the intake air when the engine 1 is started.

A common exhaust passage portion 5A which forms the downstream portion of the exhaust passage 5 is provided, from the upstream side, with an exhaust gas temperature sensor 24 which detects the temperature of the exhaust gas flowing into the common exhaust passage portion 5A from the discrete exhaust passages 7, a particulate filter 25 which traps combustible particles contained in the exhaust gas flowing through the exhaust passage 5, thereby cleaning up the exhaust gas, and an exhaust flow control valve 27 which limits the amount of exhaust gas to be discharged outside from the exhaust passage 5. The exhaust flow control valve 27 is driven by a diaphragm type actuator 26 by way of a link member 26a. Even at its minimum opening degree, the exhaust flow control valve 27 does not completely close the exhaust passage 5.

The actuators 15, 20 and 26 are connected to a vacuum pump 34 by way of branch pressure lines 31a, 31b and 31c and a common pressure line 31. The vacuum pump 34 is driven by the crankshaft of the engine 1. The branch pressure lines 31a to 31c are respectively provided with three-way solenoid valves 35, 36 and 37 which are controlled by drive signals Ca, Cb and Cc output from a control unit 50.

Each of the actuators 15, 20 and 26 has a pressure chamber, and when the drive signals Ca, Cb and Cc are input into the three-way solenoid valves 35, 36 and 37, they communicates the pressure chambers of the respective actuators with the vacuum pump 34, and otherwise they communicates the pressure chambers with the atmosphere. When negative pressure is applied to the respective pressure chambers from the vacuum pump 34, the actuator 15 drives the link member 15a to move the control lever 16a of the fuel control mechanism 16 in the direction in which the amount of fuel to be fed to the fuel injection valves 9 from the fuel pump system 11 increases, the actuator 20 drives the link member 20a to cause the intake flow control valve 21 to reduce the effective cross-sectional area of the common intake passage portion 4A, and the actuator 26 drives the link member 26a to cause the exhaust flow control valve 27 to reduce the effective cross-sectional area of the common exhaust passage portion 5A.

Into the control unit 50, the engine speed sensor 13 inputs an engine speed signal Sn representing the rotational speed of the engine 1, the exhaust gas temperature sensor 24 inputs an exhaust gas temperature signal Se representing the temperature of exhaust gas which flows the common exhaust passage portion 5A upstream of the particulate filter 25, and a filter recovery switch sensor 40 inputs a filter recovery signal Sh which represents on and off of a filter recovery switch 38, which is turned on when the particulate filter 25 is to be recovered. The control unit 50 forms the drive signals Ca, Cb and Cc for the three-way solenoid valves 35 to 37 and a drive signal Cd for the intake air heater 22 based on these signals, and selectively outputs the drive signals, thereby effecting a filter recovery control for burning combustible particles trapped in the particulate filter 25. When the particulate filter 25 is to be recovered, the filter recovery switch 38 is turned on, for instance, by the driver of the vehicle on which the engine 1 is mounted when the engine 1 is idling at the end of running. The filter recovery switch 38 is turned off, for instance, by the driver when the recovery of the particulate filter 25 is completed.

In the filter recovery control, when the filter recovery signal Sh indicates that the filter recovery switch 38 is turned on, the control unit 50 outputs the drive signal Cd to the intake air heater 22 to operate it and to begin elevating the temperature of intake air flowing through the intake passage 4 and at the same time outputs the drive signals Cb and Cc respectively to the three-way solenoid valves 36 and 37. When applied with the drive signal Cb, the three-way solenoid valve 36 operates to apply negative pressure from the vacuum pump 34 to the pressure chamber of the actuator 20, whereby the intake flow control valve 21 is closed to its minimum opening degree and reduces the effective cross-sectional area of the common intake passage portion 4A, thereby limiting the amount of intake air flowing through the intake passage 4. When applied with the drive signal Cc, the three-way solenoid valve 37 operates to apply negative pressure from the vacuum pump 34 to the pressure chamber of the actuator 26 so that the exhaust flow control valve 27 is closed and reduces the effective cross-sectional area of the common exhaust passage portion 5A, thereby limiting the amount of exhaust gas discharged from the exhaust passage 5. At this time, the drive signal Cc is such that the exhaust flow control valve 27 is once closed to substantially half of its maximum opening degree and then to its minimum opening degree. If the exhaust flow control valve 27 is quickly closed to its minimum opening degree at one time, the engine 1 can stall.

By limiting the amount of intake air flowing through the intake passage 4 by the intake flow control valve 21, the amount of intake air passing by the intake air heater 22 becomes relatively small and the temperature of the intake air can be elevated at higher rate, and at the same time, the cylinders 2 can be prevented from being fed with an excessive amount of air. Thus the combustion temperature in the cylinders is increased. Further, by limiting the amount of exhaust gas discharged from the exhaust passage by the exhaust flow control valve 27, a self-exhaust gas recirculation effect is obtained, whereby the combustion temperature in the cylinders is further increased. Further adiabatic compression of the exhaust gas occurs in the exhaust passage 5. These effects promote elevation of the temperature of the exhaust gas flowing through the exhaust passage 5 and the temperature of the exhaust gas flowing through the exhaust passage 5 can reach a predetermined value, e.g., 300°C in a relatively short time.

When the exhaust gas temperature signal Se from the exhaust gas temperature sensor 24 comes to indicate that the temperature of the exhaust gas is higher than the predetermined value, the control unit 50 outputs the drive signal Ca to the three-way solenoid valve 35. When the drive signal Ca is input into the three-way solenoid valve 35, the three-way solenoid valve 35 operates to apply negative pressure from the vacuum pump 34 to the pressure chamber of the actuator 15 so that the fuel control lever 16a of the fuel control mechanism 16 is moved in the direction in which the amount of fuel to be fed to the fuel injection valves 9 from the fuel pump system 11 increases, whereby the engine speed is increased, e.g., from 750rpm (an idle speed) to 2,000rpm. As a result, the temperature of the exhaust gas flowing through the common exhaust passage portion 5A is quickly elevated and the combustible particles trapped in the particulate filter 25 are burned under the heat of the exhaust gas.

The engine speed is kept in the increased state for a predetermined time which is sufficient to burn out the combustible particles trapped in the particulate filter 25 after the temperature of the exhaust gas as represented by the exhaust gas temperature signal Se becomes not lower than the predetermined value, e.g., 300°C. Thereafter, the control unit 50 interrupts output of the drive signals Ca, Cb, Cc and Cd to the three-way solenoid valves 35 to 37 and the intake air heater 22, whereby the engine speed is returned to the normal idle speed. Then the filter recovery switch 38 is turned off and the engine 1 is stopped.

As can be understood from the description above, in accordance with this embodiment, the combustible particles trapped in the particulate filter 25 can be burned out in a relatively short time during idle of the engine without aid of additional mechanisms such as an electric heater, a burner or the mechanism for spraying the highly combustible material.

In this embodiment, the control unit 50 is formed of a microcomputer. A example of a program which the control unit 50 executes in the filter recovery control will be described with reference to the flow chart shown in Figure 1, hereinbelow.

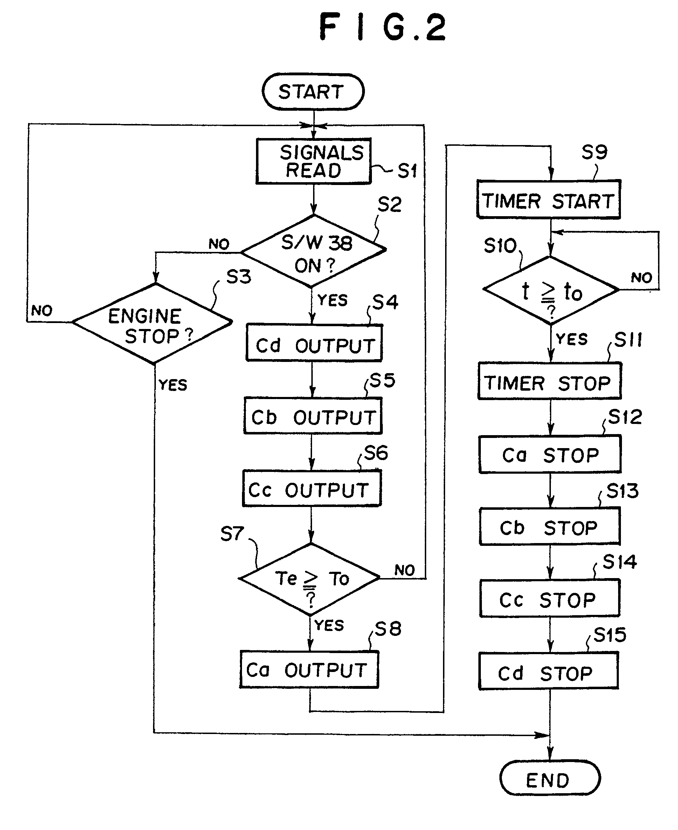

In the flow chart shown in Figure 2, the control unit 50 first reads the signals described above and determines whether the filter recovery switch 38 is on based on the filter recovery signal Sh. (steps S1 and S2) When it is determined that the filer recovery switch 38 is not on, the control unit 50 determines in step S3 whether the engine 1 has been stopped based on the engine speed signal Sn. When it is determined that the engine 1 has not been stopped, the control unit 50 returns to step S1. Otherwise, the control unit 50 ends the program.

When it is determined in step S2 that the filter recovery switch 38 is on, the control unit 50 begins to output the drive signal Cd to the intake air heater 22, the drive signal Cb to the three-way solenoid valve 36, and the drive signal Cc to the three-way solenoid valve 37 in this order. (steps S4 to S6) Then in step S7, the control unit 50 determines whether the temperature Te of the exhaust gas is not lower than the predetermined value To (e.g., 300°C). When it is determined that the former is lower than the latter, the control unit 50 returns to step S1, and otherwise, the control unit 50 proceeds to step S8.

In step S8, the control unit 50 begins to output the drive signal Ca to the three-way solenoid valve 35. Then in step S9, the control unit 50 causes a built-in timer to start time measuring. In step S10, the control unit 50 determines whether the measurement of time t is not shorter than a predetermined time to which is for instance 10 minutes. When it is determined that the former is shorter than the latter, the control unit 50 repeats step S10 until the former becomes not shorter than the latter, and otherwise, the control unit 50 causes the timer to stop measurement in step S11. Then the control unit 50 stops output of the drive signals Ca, Cb, Cc and Cd respectively in steps S12 to S15, and thereafter ends the program.

Instead of the exhaust gas temperature sensor 24, an intake air temperature sensor which detects the temperature of intake air flowing through the intake passage 4 downstream of the intake air heater 22 can be used. In this case, when the temperature of the intake air as represented by the detecting signal of the intake air temperature sensor becomes not lower than a predetermined value, e.g., 100°C, the drive signal Ca is input into the three-way solenoid valve 35 to increase the engine speed.

Further, though, in the embodiment described above, the filter recovery switch 38 is manually turned on when the engine 1 is idling at the end of running and is manually turned off when recovery of the particulate filter 25 is completed, the filter recovery switch 38 can be automatically turned on and off when a means for detecting the amount of combustible particles trapped in the particulate filter 25 is provided for the particulate filter 25. That is, the filter recovery switch 38 is automatically turned on while the engine is idling at the end of running when the means detects that the amount of the combustible particles becomes a predetermined value, and is automatically turned off when the recovery of the particulate filter 25 is completed.

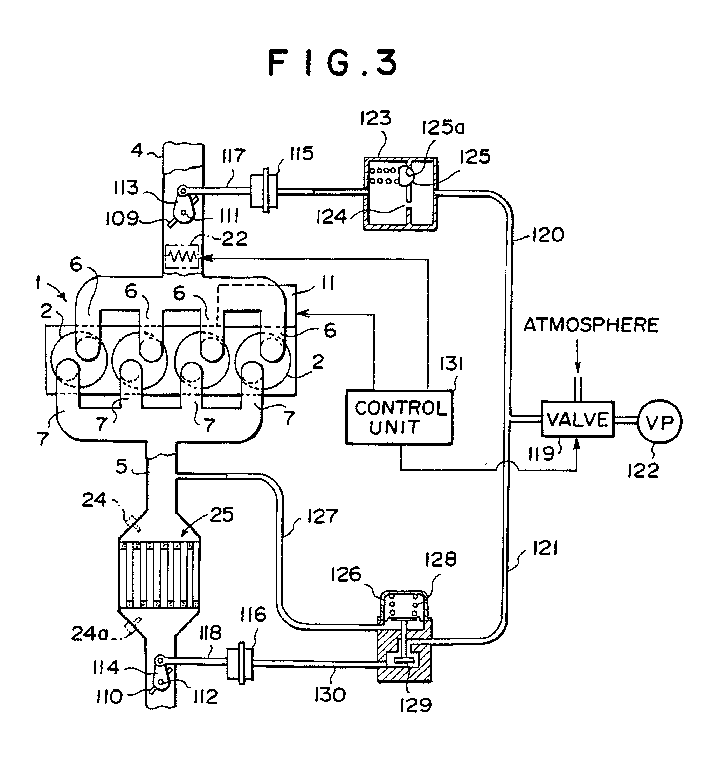

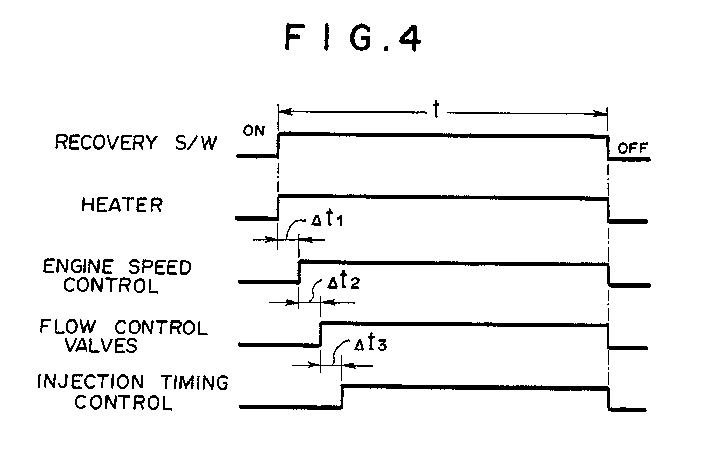

Now another embodiment of the present invention will be described with reference to Figures 3 and 4. In Figure 3, the parts analogous to those shown in Figure 1 are given the same reference numerals and will not be described in detail here.

In Figure 3, an intake flow control valve 109 is provided in the intake passage 4 upstream of the intake air heater 22. The intake flow control valve 109 is rotated about a pin 111 to change the effective cross-sectional area of the intake passage 4. The pin 111 is connected to a rod 117 by way of a lever 113 and the intake flow control valve 109 is rotated about the pin 111 when the rod 117 is pushed or pulled in its axial direction. The rod 117 is connected to a diaphragm mechanism 115 and is pushed or pulled in the axial direction under the force of air pressure acting on the diaphragm of the diaphragm mechanism 115. The diaphragm mechanism 115 is connected to a vacuum control valve 119 by way of an air passage 120. An exhaust flow control valve 110 is provided in the exhaust passage 110 downstream of the particulate filter 25. The exhaust flow control valve 110 is rotated about a pin 112 to change the effective cross-sectional area of the exhaust passage 5. The pin 112 is connected to a rod 118 by way of a lever 114 and the exhaust flow control valve 110 is rotated about the pin 112 when the rod 118 is pushed or pulled in its axial direction. The rod 118 is connected to a diaphragm mechanism 116 and is pushed or pulled in the axial direction under the force of air pressure acting on the diaphragm of the diaphragm mechanism 116. The diaphragm mechanism 116 is connected to the vacuum control valve 119 by way of an air passage 121. The vacuum control valve 119 is driven by a control signal from a controller 131 when a vacuum pump 122 is in operation and communicates the air passages 120 and 121 with the vacuum pump 122 or with the atmosphere. When the air passages 120 and 121 are communicated with the vacuum pump 122, suction force acts on the diaphragms of the respective diaphragm mechanisms 115 and 116 and the rods 117 and 118 are pulled in the respective axial directions, whereby the intake flow control valve 109 and the exhaust flow control valve 110 are rotated to reduce the effective cross-sectional areas of the intake passage 4 and exhaust passage 5. When the vacuum control valve 119 communicates the air passages 120 and 121 with the atmosphere, the suction force which has acted on the diaphragms are released and the rods 117 and 118 move in the reverse directions, whereby the intake flow control valve 109 and the exhaust flow control valve 110 are rotated to increases the effective cross-sectional areas of the intake passage 4 and exhaust passage 5.

A delay valve 123 is provided in the air passage 120 between the diaphragm mechanism 115 and the vacuum control valve 119. The delay valve 123 has a partition which is provided with an orifice 124 and a valve hole 125a. The valve hole 125a is provided with a one-way valve 125 which permits air to flow through the valve hole 125a toward the diaphragm mechanism 115 but prevents air from flowing through the valve hole 125a in the reverse direction. When the air passage 120 is communicated with the vacuum pump 122, the orifice 24 throttles air flowing through the air passage 120 toward the vacuum pump 122, thereby delaying the action of the diaphragm mechanism 115 and the intake flow control valve 109.

An exhaust pressure control valve 126 is provided in the air passage 121 between the diaphragm mechanism 116 and the vacuum control valve 119. The exhaust pressure control valve 126 has a valve body 129 which is urged by a spring 128 to a position in which it opens the air passage 121. The exhaust gas pressure in the exhaust passage 5 upstream of the exhaust flow control valve 110 is applied to the exhaust pressure control valve 126 by way of a gas passage 127. When the exhaust gas pressure in the exhaust passage 5 upstream of the exhaust flow control valve 110 is stronger than the force of the spring 128, the valve body 129 closes the air passage 121, and otherwise the valve body 129 opens the air passage 121. An orifice 130 is provided in the air passage 121 between the diaphragm mechanism 116 and the exhaust pressure control valve 126.

When the particulate filter 25 is to be recovered, a control unit 131 energizes the intake air heater 22, controls the vacuum control valve 119, and controls the fuel pump system 11 to increase the engine speed and not to advance the fuel injection timing.

In the normal operation of the engine 1, the flow control valves 109 and 110 are kept wide open and the intake air heater 22 is not energized. In this state, exhaust gas discharged from the engine 1 flows through the exhaust passage 5 and through the particulate filter 25, and combustible particles are trapped by the particulate filter 25 when the exhaust gas flows through the particulate filter 25.

When the amount of the combustible particles trapped in the particulate filter 25 reaches a predetermined value, recovery of the particulate filter 25 is required. In this embodiment, recovery of the particulate filter 25 is began in response to manual operation of a filter recovery switch (not shown) similar to the filter recovery switch 38 in the preceding embodiment. If desired, recovery of the particulate filter 25 may be automatically effected when the exhaust pressure in the exhaust passage 5 upstream of the particulate filter 25 increases to a predetermined value.

When the filter recovery switch is operated, the control unit 131 energizes the intake air heater 22 to heat the intake air fed to the cylinders 2, thereby promoting elevation of the temperature of the exhaust gas. When the temperature of the exhaust gas as detected by the exhaust gas temperature sensor 24 reaches a predetermined value ($\Delta t1$ shown in Figure 4 corresponds to the time required for the temperature of the exhaust gas to increase to the predetermined value), the control unit 131 controls the fuel pump system 11 and increases the engine speed, thereby increasing the amount of exhaust gas.

Then after a certain time lag $\Delta t2$ (Figure 4), the control unit 131 causes the vacuum control valve 119 to communicate the air passages 120 and 121 with the vacuum pump 122. At this time, the pressure of the exhaust gas in the exhaust passage 5 upstream of the particulate filter 25 is still low, and accordingly the exhaust pressure control valve 126 opens the air passage 121 and the exhaust flow control valve 110 is rotated to throttle the exhaust passage 6 by the suction force applied to the diaphragm of the diaphragm mechanism 116. At the same time, the intake flow control valve 109 is rotated to throttle the intake passage 4 by the suction force applied to the diaphragm of the diaphragm mechanism 115. However, by virtue of the delay valve 123, the intake flow control valve 109 is rotated at a lower speed than the exhaust flow control valve 110, and accordingly, the intake passage 4 is throttled later than the exhaust passage 5.

When the idle speed is increased, the fuel injection timing is generally advanced so that the fuel is completely burned in the combustion chamber. However, in this embodiment, the control unit 131 controls the fuel injection timing not to advance a certain time $\Delta t3$ (Figure 4) after the flow control valves 109 and 110 are operated to throttle the intake and exhaust passages 4 and 5. When the fuel injection timing is delayed from that in the normal idling at high speed, the fuel cannot be completely burned in the combustion chambers and is partly burned in the discrete exhaust passages 7, so-called afterburning occurs, whereby the temperature of the exhaust gas flowing through the exhaust passage 5 is elevated.

In the manner described above, heated air is fed to the engine 1, the engine 1 is caused to idle at high speed and the fuel injection timing is delayed, whereby a larger amount of high temperature exhaust gas is passed through the particulate filter 25. Further, since the intake flow control valve 109 and the exhaust flow control valve 110 throttle the intake passage 4 and the exhaust passage 5, the exhaust pressure in the exhaust passage 6 increases and the temperature of the exhaust gas in the exhaust passage 5 is further elevated. Thus the combustible particles trapped in the particulate filter 25 is effectively burned under the heat of the exhaust gas. This state is maintained for a predetermined time interval t.

When the exhaust pressure in the exhaust passage 5 is excessively increased, the exhaust valves of the engine 1 can be adversely affected. In this embodiment, when the exhaust pressure in the exhaust passage 5 increases to overcome the force of the spring 128 in the exhaust pressure control valve 126, the air passage 121 is closed and the exhaust flow control valve 110 is rotated to increase the effective cross-sectional area of the exhaust passage 5, whereby a larger amount of exhaust gas can be discharged from the exhaust passage and the exhaust pressure is reduced. On the other hand, when the exhaust pressure is reduced, the spring 128 causes the valve body 129 to open the air passage 121 and the exhaust flow control valve 110 is rotated to reduce the effective cross-sectional area of the exhaust passage 5. Thus the exhaust pressure is held at a value substantially corresponding to the force of the spring 128. The orifice 130 provided in the air passage 121 between the exhaust pressure control valve 126 delays the response of the diaphragm mechanism 116 and the exhaust flow control valve 110 to the operation of the exhaust pressure control valve 126, whereby hunting of the exhaust flow control valve 110 can be prevented. Instead of such an orifice 30, a chamber can be used.

When the predetermined time interval t lapses, the vacuum control valve 119 communicates the air passages 120 and 121 with the atmosphere. At this time, the diaphragm mechanism 115 is quickly communicated with the atmosphere since the one-way valve 125 opens the valve hole 125a. Further the diaphragm mechanism 116 is also quickly communicated with the atmosphere by way of the exhaust pressure control valve 126. The flow control valves 109 and 110 are thus returned to the original position substantially simultaneously.

In order to know whether recovery of the particulate filter 25 is being effectively carried out, another exhaust temperature sensor 24a may be provided in the exhaust passage 5 downstream of the particulate filter 25.

**Claims**

1. An exhaust gas cleaning system for a diesel engine comprising

a particulate filter which is disposed in an exhaust passage of the diesel engine and traps combustible particles contained in exhaust gas flowing through the exhaust passage,

an exhaust flow control valve which is disposed in the exhaust passage downstream of the particulate filter and limits the amount of exhaust gas flowing through the exhaust passage to a predetermined value,

an intake air heating means which is disposed in the intake passage of the engine and heats intake air flowing through the intake passage,

a temperature sensor which detects the temperature of intake air in the intake passage downstream of the intake air heating means or the temperature of exhaust gas in the exhaust passage upstream of the particulate filter,

an engine speed control means which increases the engine speed,

a filter recovery detecting means which detects that the particulate filter is to be recovered, and

a control means which, when the filter recovery detecting means detects that the particulate filter is to be recovered, causes the intake air heating means to heat the intake air and the exhaust flow control valve to limit the amount of exhaust gas flowing through the exhaust passage to said predetermined value and then causes the engine speed control means to increase the engine speed so that the combustible particles trapped in the particulate filter burns under the heat of the exhaust gas, the control means causing the engine speed control means to increase the engine speed when the temperature detected by the temperature sensor reaches a predetermined value.

2. An exhaust gas cleaning system as defined in Claim 1 in which said intake air heating means is an intake air heater which is for facilitating starting of the engine.

3. An exhaust gas cleaning system as defined in Claim 2 in which said engine speed control means increases the engine speed by increasing the amount of fuel injected into to the engine.

4. An exhaust gas cleaning system as defined in Claim 3 which further comprises an intake flow control valve which is disposed in the intake passage upstream of the intake air heating means and limits the amount of intake air flowing through the intake passage, and in which said control means causes the intake flow control valve to limit the amount of intake air after the intake air heating means begins to heat the intake air and before said exhaust flow control valve begins to limit the amount of exhaust gas flowing through the exhaust passage to the predetermined value.

5. An exhaust gas cleaning system as defined in Claim 4 in which said control means causes the exhaust flow control valve to once limit the amount of exhaust gas flowing through the exhaust passage to substantially a half of said predetermined value and then limit the same to the predetermined value.

6. An exhaust gas cleaning system as defined in Claim 1 further comprising an intake flow control valve which is disposed in the intake passage upstream of the intake air heating means and limits the amount of intake air flowing through the intake passage and an exhaust pressure control means which detects the pressure of the exhaust gas in the exhaust passage upstream of the exhaust flow control valve and controls the opening degree of the exhaust flow control valve so that the pressure of the exhaust gas becomes a predetermined value, and in which said control means causes the intake flow control valve to limit the amount of intake air after said exhaust flow control valve begins to limit the amount of exhaust gas flowing through the exhaust passage.

7. An exhaust gas cleaning system as defined in Claim 6 in which said engine speed control means increases the engine speed by increasing the amount of fuel injected into to the engine.

8. An exhaust gas cleaning system as defined in Claim 7 in which said control means controls the timing at which the fuel is injected into the engine not to advance with increase in the engine speed.

9. An exhaust gas cleaning system as defined in Claim 6 in which said exhaust flow control valve is driven by a first diaphragm mechanism which drives the exhaust flow control valve to reduce the effective cross-sectional area of the exhaust passage when it is applied with negative pressure and drives the same to increase the effective cross-sectional area of the exhaust passage when it is applied with an atmospheric pressure, and said intake flow control valve is driven by a second diaphragm mechanism which drives the intake flow control valve to reduce the effective cross-sectional area of the intake passage when it is applied with negative pressure and drives the same to increase the effective cross-sectional area of the exhaust passage when it is applied with an atmospheric pressure, the first and second diaphragm mechanisms being connected to a vacuum source by way of first and second branch air passages and a common air passage which is connected to the vacuum source by way of a vacuum control valve which selectively communicates the common air passage with the vacuum source or the atmosphere, said control means causing the vacuum control valve to communicate the common air passage with the vacuum source when the exhaust and intake flow control valves are to limit the amount of exhaust gas and the amount of intake air, said second branch air passage being provided with an orifice which narrows the second branch air passage so that the negative pressure from the vacuum source is applied to the second diaphragm mechanism later than the first diaphragm mechanism when the vacuum control valve communicates the common air passage with the vacuum source.

10. An exhaust gas cleaning system as defined in Claim 9 in which said exhaust pressure control means comprises a valve means which is disposed in said first branch air passage and has a valve body which is urged by a spring in the direction in which it opens the first branch air passage, the valve body having a pressure receiving portion which is communicated with the exhaust passage upstream of the exhaust flow control valve by way of an air passage and is urged by the pressure in the exhaust passage in the direction in which the valve body closes the first branch air passage.

# F I G.1

EP 0 445 567 A1

# F I G . 2

START

SIGNALS READ — S1

S2 S/W 38 ON ? — NO / YES

S3 ENGINE STOP ? — NO / YES

S4 Cd OUTPUT

S5 Cb OUTPUT

S6 Cc OUTPUT

S7 Te ≥ To ? — NO / YES

S8 Ca OUTPUT

S9 TIMER START

S10 t ≥ to ? — NO / YES

S11 TIMER STOP

S12 Ca STOP

S13 Cb STOP

S14 Cc STOP

S15 Cd STOP

END

11

# F I G . 3

# F I G . 4

**European Patent Office**

# EUROPEAN SEARCH REPORT

Application Number

**EP 91 10 2309**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 726 164 (DAIMLER-BENZ AG.)<br>* column 3, line 11 - column 4, line 57; figures *<br>– – – | 1 | F 01 N 3/02<br>F 02 N 9/00<br>F 02 D 33/02 |
| A | PATENT ABSTRACTS OF JAPAN vol. 10, no. 246 (M-510)(2302) 23 August 1986,<br>& JP-A-61 76752 (TOYOTA MOTOR CORP.) 19 April 1986,<br>* the whole document *<br>– – – | 2 | |
| A | PATENT ABSTRACTS OF JAPAN vol. 10, no. 246 (M-510)(2302) 23 August 1986,<br>& JP-A-61 76756 (TOYOTA MOTOR CORP.) 19 April 1986,<br>* the whole document *<br>– – – | 1,2 | |
| A | EP-A-0 010 384 (GENERAL MOTORS CORP.)<br>* page 2, line 20 - page 3, line 20; figures *<br>– – – | 1,3,4,7 | |
| A | DE-A-2 930 969 (DAIMLER-BENZ AG.)<br>* page 3, lines 1 - 22 * * page 4, line 8 - page 5, line 1; figures *<br>– – – | 1,5,6,9 | |
| A | US-A-4 685 290 (KAMIYA ET-AL)<br>– – – | | TECHNICAL FIELDS SEARCHED (Int. Cl.5) |
| A | US-A-4 319 896 (SWEENEY)<br>– – – – – | | F 02 D<br>F 01 N<br>F 02 M |

The present search report has been drawn up for all claims

| Place of search | Date of completion of search | Examiner |
|---|---|---|
| The Hague | 12 June 91 | MOUALED R. |